## Europäisches Patentamt

(19) **European Patent Office**

**Office européen des brevets**

(11) Veröffentlichungsnummer: **0 242 660 B1**

(12) **EUROPÄISCHE PATENTSCHRIFT**

(45) Veröffentlichungstag der Patentschrift:
22.11.90

(51) Int. Cl.⁵: **F16C 13/02**

(21) Anmeldenummer: 87104919.3

(22) Anmeldetag: 02.04.87

(54) Deformationsregelwalze.

(30) Priorität: 09.04.86 DE 3611858

(43) Veröffentlichungstag der Anmeldung:
28.10.87 Patentblatt 87/44

(45) Bekanntmachung des Hinweises auf die Patenterteilung:
22.11.90 Patentblatt 90/47

(84) Benannte Vertragsstaaten:
BE CH FR GB IT LI NL SE

(56) Entgegenhaltungen:
EP-A- 0 242 659
CH-A- 590 732
DE-A- 2 332 861
DE-A- 3 325 385
DE-B- 2 632 452
FR-A- 2 226 508
FR-A- 2 441 087
GB-A- 2 060 822

"Lubrification Hydrodynamique", Laboratoire de Mécanique des Contacts, INSA, Lyon, 1978

(73) Patentinhaber: Kleinewefers GmbH,
Kleinewefersstrasse 25, D-4150 Krefeld 1(DE)

(72) Erfinder: Pav, Josef, Dr., Eichhornweg 36c,
D-4150 Krefeld(DE)
Erfinder: Wenzel, Reinhard, Glindholzstrasse 19,
D-4150 Krefeld(DE)

(74) Vertreter: Knoblauch, Ulrich, Dr.-Ing.,
Kühhornshofweg 10, D-6000 Frankfurt am Main 1(DE)

**Beschreibung**

Die Erfindung bezieht sich auf eine Deformationsregelwalze für ein Walzensystem mit mindestens zwei einen Walzenspalt zwischen sich bildenden Walzen, bei der eine Walzenschale mit Hilfe von hydrostatischen Lagerelementen, die durch Druckgeber belastet sind, auf einem die Walzenschale durchsetzenden, drehfest gehaltenen Träger abgestützt und radial relativ zum Träger verstellbar ist, wobei Primär-Lagerelemente auf der Walzenspalt-Seite und Sekundär-Lagerelemente auf der gegenüberliegenden Seite des Trägers vorgesehen und zumindest die Primär-Lagerelemente zonenweise unterschiedlich mit Druck versorgbar sind, insbesondere mit Lagerelementen, an denen mindestens zwei in Umfangsrichtung versetzte Druckgeber angreifen.

Bei einer bekannten Deformationsregelwalze dieser Art (DE-A 3 325 385) sind die Primär-Lagerelemente und die Sekundär-Lagerelemente einschließlich ihrer Druckgeber einander gleich ausgebildet. Die Druckkammern der Druckgeber, die mit einem regelbaren Druck versorgt werden, stehen über eine Drossel mit einer Lagertasche in der Fläche des Lagerelements in Verbindung. Zwischen Walzenschale und Lagerfläche ist daher immer ein Druckmittelfilm vorhanden. Dies ergibt eine erheblich geringere Reibung als bei einer mechanischen Gleitberührung. Zur Steuerung bzw. Regelung des Querprofils der im Walzenspalt behandelten Warenbahn ist die Stellgenauigkeit der Deformationsregelwalze von entscheidender Bedeutung. Durch entsprechende Druckansteuerung der Primär- und Sekundär-Lagerelemente kann man die gewünschte Form der Walzenschale und die gewünschte Streckenlast wählen. Da die Lagerelemente jeweils von zwei in Umfangsrichtung versetzten Druckgebern belastet sind, üben die einander gegenüberliegenden Lagerelemente eine starke Stabilisierung gegen eine Querverlagerung der Walzenschale aus.

Auch bei der Deformationsregelwalze nach GB-A 2 060 822 haben die Sekundär-Lagerelemente, die in der gleichen Anzahl wie die Primär-Lagerelemente vorhanden sind, die gleiche Lagerfläche wie diese.

Bei einer anderen bekannten Deformationsregelwalze (CH-A 590 732) sind lediglich drei Sekundär-Lagerelemente vorgesehen, deren Lagerfläche jeweils die gleiche Größe hat wie diejenige der dreizehn Primär-Lagerelemente.

Aus «Lubrification hydrodynamique» Laboratoire de mécanique des contacts INSA Lyon 1978, Seiten 50 bis 54, ist zu entnehmen, daß die Reibungsverluste bei einem hydrostatischen Lager proportional zur Fläche und umgekehrt proportional zur Spaltweite zunehmen.

Der Erfindung liegt die Aufgabe zugrunde, die Deformationsregelwalze der eingangs beschriebenen Art anzugeben, die unter sonst gleichen Umständen auf einem niedrigeren Temperaturniveau arbeitet.

Diese Aufgabe wird erfindungsgemäß dadurch gelöst, daß zur Verminderung der reibungsbedingten Wärmeentwicklung die hydrostatische Lagerfläche zumindest bei einem Teil der Sekundär-Lagerelemente kleiner ist als diejenige der Primär-Lagerelemente, wobei die gesamte Lagerfläche der Sekundär-Lagerelemente kleiner ist als die gesamte Lagerfläche der Primär-Lagerelemente, und daß die in der Fläche verkleinerten Sekundär-Lagerelemente bei einem für die Walze vorgesehenen Anwendungsfall mit einem höheren Druck betrieben werden als er zur Erzeugung derselben Stützkraft erforderlich wäre, wenn das betreffende Sekundär-Lagerelement die gleiche hydrostatische Lagerfläche wie ein unverkleinertes Sekundär-Lagerelement aufwiese.

Durch diese Verkleinerung der Lagerfläche ergibt sich eine verminderte Reibung, wenn die Druckflüssigkeit aus der Lagertasche über den zwischen dem angrenzenden Rand der Lagerfläche und der Walzenschale gebildeten Spalt abströmt, und daher auch eine verminderte Wärmeentwicklung. Die geringere Reibung bedeutet nicht nur eine geringere Erwärmung, sondern auch eine verminderte Antriebsleistung. Die Verkleinerung der Lagerfläche setzt eine Erhöhung des Drucks in der Lagertasche voraus, damit die gleiche Lagerkraft übertragen werden kann. Da die Sekundär-Lagerelemente in der Regel mit erheblich geringeren Lagerkräften arbeiten als die Primär-Lagerelemente, bereitet es keine Schwierigkeiten, diese Druckerhöhung im Rahmen der üblichen Betriebsdrücke durchzuführen.

Durch die verminderte Erwärmung gelingt es, das Temperaturniveau und auch lokale Temperaturmaxima niedriger zu halten. Dies it besonders vorteilhaft bei Walzenschalen, die mit einem elastischen Bezug, beispielsweise aus Papier oder Kunststoff, versehen sind, der einerseits eine Wärmeabfuhr behindert und andererseits beim Überschreiten eines bestimmten Temperaturgrenzwerts unbrauchbar wird. Die lokale Temperaturerhöhung im Bereich der Sekundär-Lagerelemente ist ebenfalls geringer, so daß die temperaturabhängige Balligkeit kleiner ist und die Regelung des Walzenspalts erleichtert wird. Wenn die Sekundär-Lagerelemente gleichmäßig über die Länge der Walzenschale verteilt sind, kann man schädliche partielle Erwärmungen weitgehend vermeiden.

Vorzugsweise ist auch die Querschnittsfläche der Druckgeber bei den Sekundär-Lagerelementen kleiner als diejenige bei den Primär-Lagerelementen. Da ohnehin in den Lagertaschen ein höherer Druck auftritt, kann man einen entsprechend erhöhten Druck auch bei verkleinerten Druckgeberabmessungen im Druckgeber verwenden.

In der Praxis hat es sich bewährt, daß die Lagerfläche und/oder Druckgeberquerschnittsfläche der Sekundär-Lagerelemente etwa halb so groß wie diejenigen der Primär-Lagerelemente sind.

Die Sekundär-Lagerelemente können ferner einen größeren axialen Abstand voneinander haben also die Primär-Lagerelemente. Die verminderte Zahl der kleineren Sekundär-Lagerelemente reicht zumeist aus, um die gesamte erforderliche Negativ-Kraft aufzubringen, gegebenenfalls unter Erhöhung des zugeführten Drucks. Hierbei wird die Reibung noch weiter reduziert.

Günstig ist es auch, wenn die Sekundär-Lagerelemente in einem größeren Abstand von den Enden der Walzenschale angeordnet sind als die Primär-Lagerelemente. Hierdurch werden Bombierungen gerade an den Walzenenden vermieden. Andererseits genügen die Negativ-Kräfte, welche die verbleibenden Sekundär-Lagerelemente ausüben, in zahlreichen Fällen, wenn man die Elemente über die gesamte übrige Walzenlänge gleichmäßig verteilt.

Mit besonderem Vorteil sind die Enden der Walzenschale auf einem Lagerring gelagert, der radial zum Träger verstellbar, aber in beliebigen Zwischenpositionen des Verstellwegs durch eine Blockiervorrichtung arretierbar ist. Durch diese Blockiervorrichtung läßt sich die Achse der Walzenschale in einer wählbaren Position fixieren. Durch diese Fixierung können die von den Lagerelementen auszuübenden Kräfte ganz wesentlich reduziert werden. Geringere Lagerkräfte führen aber generell zu einer verminderten Wärmeentwicklung durch Reibung. Es ist sogar möglich, für einen gegebenen Anwendungsfall die Summe aller von den Lagerelementen auf die Walzenschale zu übertragenden Lagerkräfte zu minimieren. Vor allem ist es unnötig, nahe den Enden der Walzenschale Sekundär-Lagerelemente vorzusehen.

Die Blockiervorrichtung weist vorzugsweise mindestens eine Kammer mit sich bei der Verstellung veränderndem Volumen auf, die über ein Absperrventil mit einer Flüssigkeitsquelle verbunden ist. Durch Absperren ergibt sich die gewünschte Arretierung.

Bei einer bevorzugten Ausführungsform bildet die Deformationsregelwalze die eine endständige Walze des Walzensystems, dessen andere endständige Walze ebenfalls durch eine Durchbiegungsregelwalze gebildet ist. Diese beiden gegeneinander wirkenden Durchbiegungsregelwalzen erlauben es, die Summe der Lagerkräfte in der einen und in der anderen Walze noch weiter zu reduzieren und damit die Reibung noch stärker zu vermindern. Es kann sich sogar um gleiche Deformationswalzen handeln, was die Lagerhaltung vereinfacht.

Die Erfindung wird nachstehend anhand in der Zeichnung dargestellter, bevorzugter Ausführungsbeispiele näher erläutet. Es zeigen:

Fig 1. einen Teillängsschnitt durch eine erfindungsgemässe Deformationsregelwalze,
Fig. 2 einen Schnitt längs der Linie A-A in Fig. 1,
Fig. 3 einen Schnitt längs der Linie B-B in Fig. 1,
Fig. 4 einen Teillängsschnitt durch eine abgewandelte Ausführungsform,
Fig. 5 einen Teillängsschnitt durch eine weitere Ausführungsform,
Fig. 6 schematisch ein Walzensystem mit der erfindungsgemäßen Deformationsregelwalze und
Fig. 7 schematisch ein anderes Walzensystem mit zwei Deformationsregelwalzen.

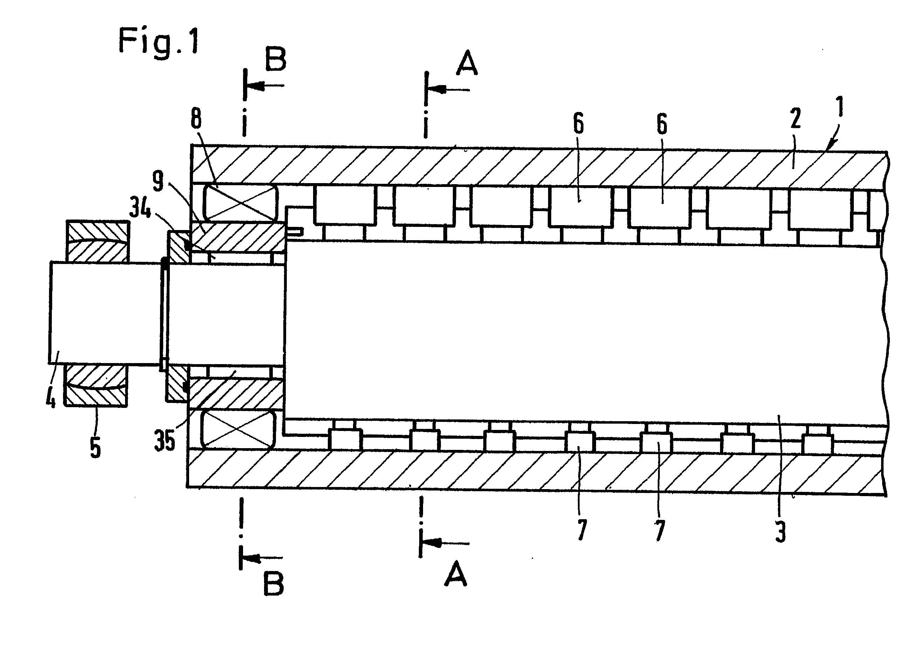

Die in den Figuren 1 bis 3 veranschaulichte Deformationsregelwalze 1 weist eine Walzenschale 2 auf, die von einem Träger 3 durchsetzt ist. Dieser ist mit seinen Enden 4 jeweils drehfest in einem Kalottenlager 5 gehalten. Die Walzenschale 2 wird durch in der Druckbehandlungsebene wirkende Primär-Lagerelemente 6 und gegenüberliegende Sekundär-Lagerelemente 7 auf dem Träger 3 abgestützt. Beispielsweise werden die ersten beiden Primär-Lagerelemente 6 von einem gemeinsamen ersten Druckeinstellorgan mit demselben Druck versorgt und bilden eine erste Zone, die nächsten Primär-Lagerelemente 6 eine zweite Zone und so fort. Entsprechendes gilt für die Sekundär-Lagerelemente 7. Die Enden der Walzenschale sind über ein Wälzlager 8 auf einem drehfesten Lagerring 9 gehalten. Er ist in der Druckbehandlungsebene radial verlagerbar.

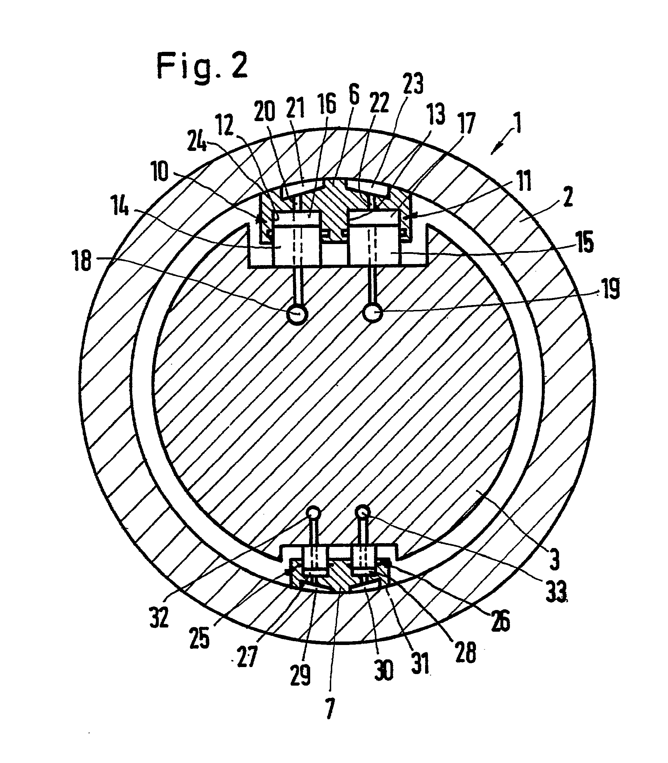

Wie Fig. 2 zeigt, ist das Primär-Lagerelemente mit zwei Druckgebern 10 und 11 versehen, die in Umfangsrichtung gegeneinander versetzt sind. Zur Bildung der Druckgeber weist das Lagerelement 6 zwei zylindrische Bohrungen 12 und 13 auf, in welche am Träger 3 befestigte Kolben 14 bzw. 15 eingreifen. Dem so gebildeten Druckraum 16 bzw. 17 wird Druckflüssigkeit von einer Leitung 18 bzw. 19 zugeführt. Der Druckraum 16 ist über einen Drosselkanal 20 mit einer Lagertasche 21, der Druckraum 17 über einen Drosselkanal 22 mit einer Lagertasche 23 in der Lagerfläche 24 des Primär-Lagerelements 6 verbunden. Wird über die Leitungen 18, 19 Druckflüssigkeit mit einem änderbaren Druck zugeführt, ergibt sich eine Belastung des Primär-Lagerelements 6 in den beiden Druckräumen 16 und 17 sowie eine hydrostatische Lagerung im Bereich der Lagertaschen 21 und 23. Die Druckflüssigkeit strömt dann von der Lagertaschen nach außen durch einen zwischen der Lagerfläche 24 und der Innenfläche der Schale 2 gebildeten Spalt.

Das Sekundär-Lagerelement 7 hat einen ähnlichen Aufbau mit zwei in Umfangsrichtung versetzten Druckgebern 25 und 26, deren Druckräume 27 und 28 über Drosseln mit Lagertaschen 29 und 30 in der Lagerfläche 31 des Lagerelements 7 verbunden sind. Druckflüssigkeit mit änderbarem Druck wird über Leitungen 32 und 33 zugeführt. Die Lagerfläche 31 des Sekundär-Lagerelements 7 ist erheblich kleiner als die Lagerfläche 24 des Primär-Lagerelements 6. Das gleiche gilt für die Querschnittsflächen der Druckräume 27 und 28 im Vergleich zu den Druckräumen 16 und 17. Obwohl zur Aufrechterhaltung gleicher Verhältnisse infolge dieser Verkleinerung des Sekundär-Lagerelements 7 der zugeführte Druck höher sein muß, ist die Reibung in dem Spalt zwischen der Walzenschale 2 und dem außerhalb der Lagertaschen 29 und 30 liegenden Rand der Lagerfläche 31 vermindert, so daß eine geringere Antriebsleistung aufzubringen ist und eine geringere Reibungserwärmung auftritt.

Als Lagerfläche 24 bzw. 31 wird die gesamte der Walzenschale 2 gegenüberstehende Fläche der Lagerelemente 6 und 7 bezeichnet, die sich aus den Lagertaschen und den diese umgebenden Stegen zusammensetzt. Die Verminderung der Reibung beruht im wesentlichen darauf, daß bei einer Verkleinerung der Lagerfläche auch die Umfangslänge und damit die wirksame Fläche der Randstege verkleinert wird.

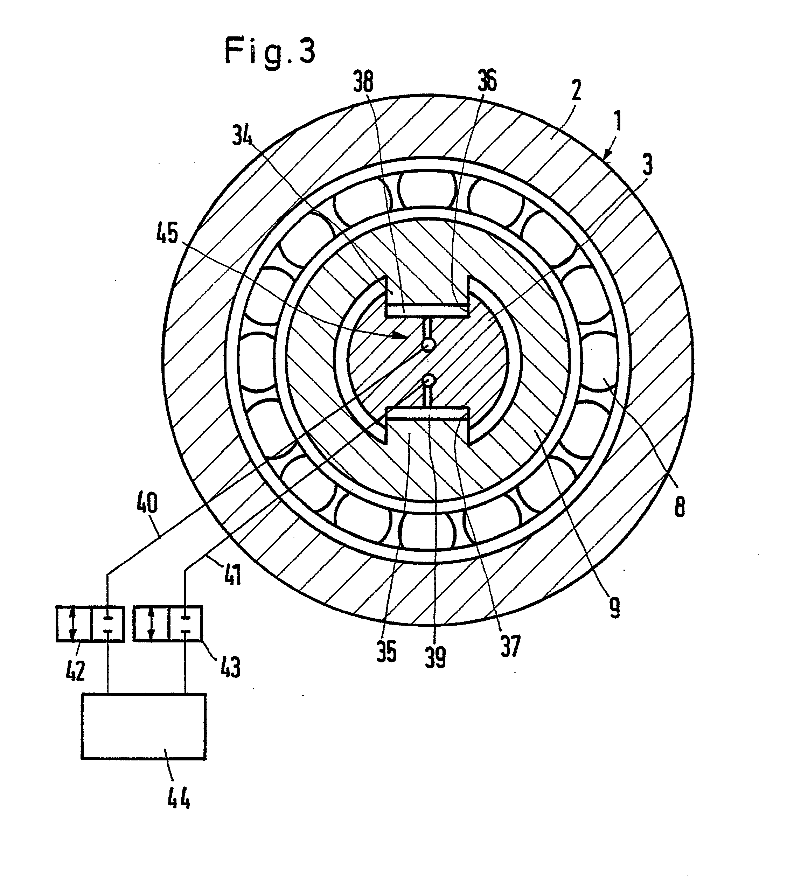

Wie Fig. 3 zeigt, greifen zwei Kolben 34 und 35, die mit dem Lagerring 9 fest verbunden sind, in entsprechende Zylinderbohrungen 36 bzw. 37 des Trägers 3. Hierdurch entstehen zwei Kammern 38 und 39, die durch nicht veranschaulichte Dichtungen abgeschlossen sind. Die Kammern 38 und 39 sind über Kanäle 40 und 41 sowie ein Absperrventil 42 bzw. 43 mit einer Flüssigkeitsquelle 44 verbunden und bilden eine Blockiervorrichtung 45, die es erlaubt, den Lagerring 9 in jeder Zwischenstellung seines radialen Verstellweges zu arretieren. Außerdem verhindern die Kolben 34 und 35 eine Verdrehung des Lagerringes 9. Wenn eine Verschiebung des Lagerrings 9 bei geöffneten Absperrventilen 42 und 43 allein durch die Wirkung der Primär- oder Sekundär-Lagerelemente 6 und 7 erfolgt, genügt eine Flüssigkeitsquelle sehr geringen Drucks; er muß nur ausreichen, de Kammern 38 und 39 jeweils gefüllt zu halten. Man kann aber auch eine Flüssigkeitsquelle höheren Drucks verwenden, die in der Lage ist, den Lagerring 9 zusammen mit dem Ende der Walzenschale 2 unter Überwindung von äußeren Gegenkräften anzuheben. Ist die richtige Position erreicht, werden die Absperrventile 42 und 43 geschlossen. Dies ergibt eine Fixierung der Achse der Walzenschale 2 an beiden Enden, wie sie sonst nur bei einer festen Lagerung erfolgt.

Die einheitliche Schraffur von Lagerring 9 und Kolben 34 und 35 in Fig. 3 soll andeuten, daß diese Teile mechanisch fest miteinander verbunden sind. In der Praxis werden die Kolben 34, 35 getrennt vom Lagerring 9 gefertigt. Zur Montage werden sie in die Zylinder 38, 39 gelegt, worauf der Lagerring 9 axial darüber geschoben wird. Dann werden die Teile durch mehrere zur Kolbenachse parallele Schrauben miteinander verbunden.

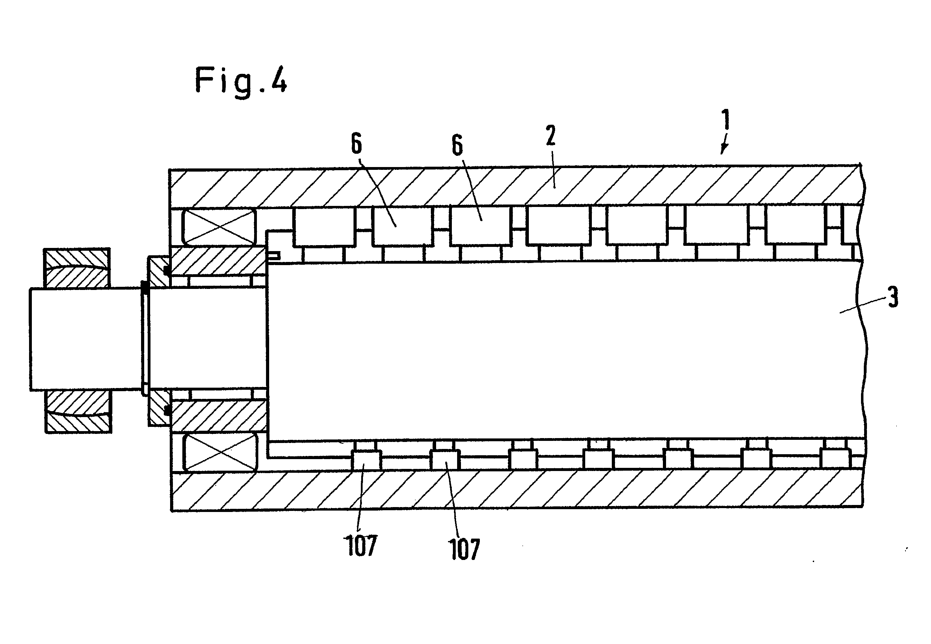

Bei der Ausführungsform nach Fig. 4 entsprechen alle Teile denjenigen der Fig. 1. Lediglich die Sekundär-Lagerelemente 107 sind derart versetzt angeordnet, daß sich gegenüber dem letzten Primär-Lagerelement 6 kein Sekundär-Lagerelement mehr befindet.

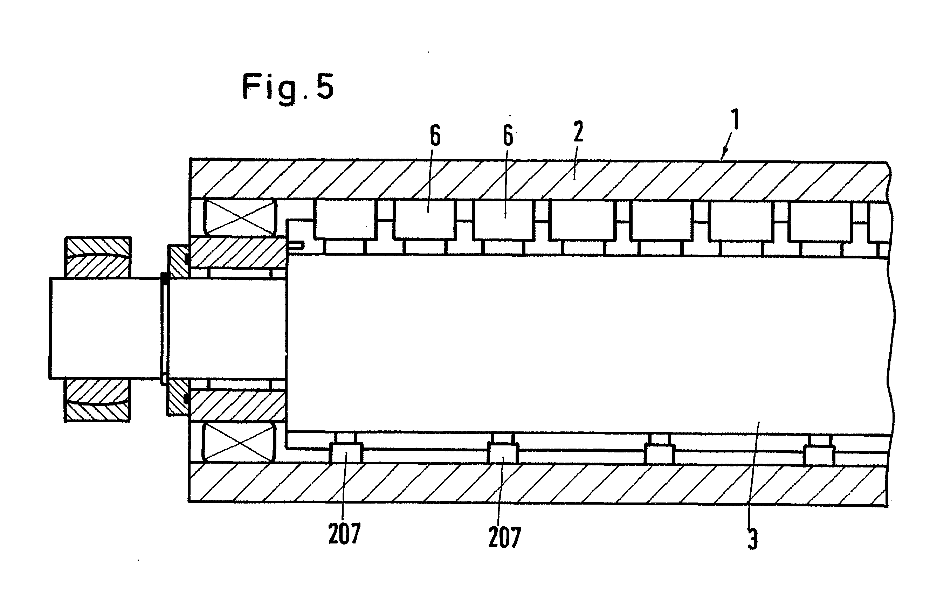

Die Ausführungsform der Fig. 5 unterscheidet sich von derjenigen der Fig. 1 dadurch, daß die Sekundär-Lagerelemente 207 einen wesentlich größeren axialen Abstand voneinander haben als die Primär-Lagerelemente 6.

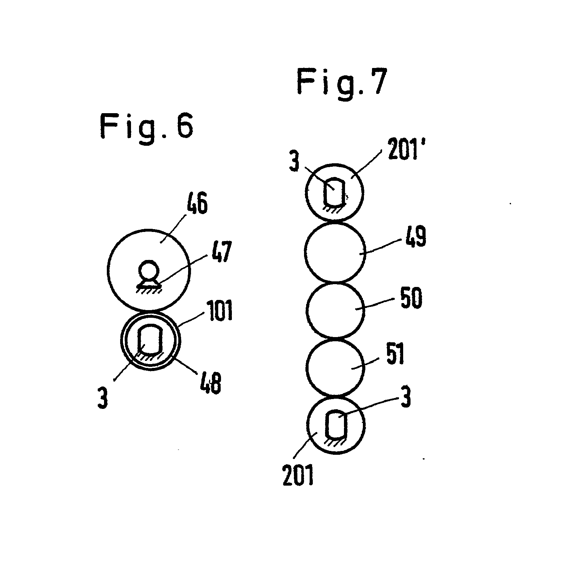

In Fig. 6 ist ein Walzensystem veranschaulicht, das aus einer Basiswalze 46 mit festem Lager 47 und einer Deformationsregelwalze 101 besteht, die außen an der Walzenschale einen elastischen Bezug 48 aus Papier oder Kunststoff aufweist. Wenn die Basiswalze 46 eine Deformationsregelwalze mit ähnlichem Aufbau wie die Deformationsregelwalze 101 ist, so ergibt sich das feste Lager 47 dadurch, daß die Lagerringe 9 durch die Blockiervorrichtung 45 in einer festen Zwischenposition arretiert oder durch Füllung der oberen Kammern 38 in der durch mechanische Anlage gebildeten unteren Endposition gehalten werden.

Bei der Ausführungsform nach Fig. 7 ist ein Superkalander mit mehreren übereinander angeordneten Walzen vorgesehen. Die unterste Walze ist eine Deformationsregelwalze 201. Die oberste Walze ist eine Deformationsregelwalze 201'. Dazwischen befinden sich übliche Kalanderwalzen 49, 50 und 51, von denen beispielsweise jede zweite mit einem elastischen Bezug versehen sein kann. Die beiden Deformationsregelwalzen 201 und 201' können einander gleich sein. Auch hier werden die Enden der Walzenmäntel durch Arretierung der Lagerringe in gewählten Zwischen- bzw. Endpositionen fest gelagert.

In den Fig. 6 und 7 sind die Träger 3 bzw. das Lager 47 ortsfest dargestellt, wie es der Betriebsstellung entspricht. Es versteht sich aber, daß diese Lagerung in üblicher Weise eine Schnellabsenkung bzw. eine Anpassung an unterschiedliche Walzendurchmesser zuläßt. Die Träger 3 sind derart eingebaut, daß die Primär-Lagerelemente 6 dem benachbarten Walzenspalt zugewandt und die Sekundär-Lagerelemente 7 diesem Walzenspalt abgewandt sind.

Zur Behandlung eines Bahnmaterials im Walzenspalt ist eine bestimmte Größe und Verteilung der Streckenlast und eine bestimmte Form des Walzenspalts erforderlich. Diese Bedingungen werden durch die Positionierung des Lagerringes 9 mit Bezug auf den Träger 3 sowie durch eine entsprechende zonenweise Druckansteuerung der Primär-Lagerelemente 6 und der Sekundär-Lagerelemente 7 bewirkt. Es gibt jeweils eine Position des Lagerringes 9, bei der die Summe aller durch die Lagerelemente 6 und 7 aufzubringenden Kräfte ein Minimum ist. Dies kann durch Versuche ermittelt werden. Moderne Walzensysteme besitzen einen Rechner, der die entsprechenden Werte vorgibt. Kleine Lagerkräfte und kleine Lagerflächen der Sekundär-Lagerelemente 7 führen zu einer erheblichen Verminderung der Reibung.

Die Blockiervorrichtung 45 kann auch einen anderen Aufbau haben. Hydraulische Blockiervorrichtungen sind gegenüber mechanischen Blockiervorrichtungen zu bevorzugen, weil sie auf einfachere Weise verstellbar sind. Statt der veranschaulichten Kammern kommen auch Balgdosen, Wellrohrelemente u.dgl. in Betracht.

**Patentansprüche**

1. Deformationsregelwalze für ein Walzensystem mit mindestens zwei einen Walzenspalt zwischen sich bildenden Walzen, bei der eine Walzenschale (2) mit Hilfe von hydrostatischen Lagerelementen, die durch Druckgeber belastet sind, auf einem die Walzenschale (2) durchsetzenden, drehfest gehaltenen Träger (3) abgestützt und radial relativ zum Träger verstellbar ist, wobei Primär-Lagerelemente (6) auf der Walzenspalt-Seite und Sekundär-Lagerelemente (7) auf der gegenüberliegenden Seite des Trägers (3) vorgesehen und zumindest die Primär-Lagerelemente (6) zonenweise unterschiedlich mit Druck versorgbar sind, insbesondere mit Lagerelementen, an denen mindestens zwei in Umfangsrichtung versetzte Druckgeber angreifen, dadurch gekennzeichnet, daß zur Verminderung der reibungsbedingten Wärmeentwicklung die hydrostatische Lagerfläche (31) zumindest bei einem Teil der Sekundär-Lagerelemente (7) kleiner ist als diejenige (24) der Primär-Lagerelemente (6), wobei die gesamte Lagerfläche der Sekundär-Lagerelemente (7) kleiner ist als die gesamte Lagerfläche der Primär-Lagerelemente (6), und daß die in der Fläche verkleinerten Sekundär-Lagerelemente bei einem für die Walze vorgesehenen Anwendungsfall mit einem höheren Druck betrieben werden als er zur Erzeugung derselben Stützkraft erforderlich wäre, wenn das betreffende Sekundär-Lagerelement die gleiche hydrostatische Lagerfläche wie ein unverkleinertes Sekundär-Lagerelement aufwiese.

2. Deformationsregelwalze nach Anspruch 1, dadurch gekennzeichnet, daß auch die Querschnittsfläche der Druckgeber (25, 26) bei den Sekundär-Lagerelementen (7) kleiner ist als diejenige bei den Primär-Lagerelementen (6).

3. Deformationsregelwalze nach Anspruch 1 oder 2, dadurch gekennzeichnet, daß die Lagerfläche und/oder Druckgeberquerschnittsfläche der Sekundär-Lagerelemente (7) etwa halb so groß wie diejenigen der Primär-Lagerelemente (6) sind.

4. Deformationsregelwalze nach einem der Ansprüche 1 bis 3, dadurch gekennzeichnet, daß die Sekundär-Lagerelemente (207) einen größeren axialen Abstand voneinander haben als die Primär-Lagerelemente (6).

5. Deformationsregelwalze nach einem der Ansprüche 1 bis 4, dadurch gekennzeichnet, daß die Sekundär-Lagerelemente (107) in einem größeren Abstand von den Enden der Walzenschale angeordnet sind als die Primär-Lagerelemente (6).

6. Deformationsregelwalze nach einem der Ansprüche 1 bis 5, dadurch gekennzeichnet, daß die Enden der Walzenschale (2) auf einem Lagerring (9) gelagert sind, der radial zum Träger (3) verstellbar, aber in beliebigen Zwischenpositionen des Verstellwegs durch eine Blockiervorrichtung (45) arretierbar ist.

7. Deformationsregelwalze nach Anspruch 6, dadurch gekennzeichnet, daß die Blockiervorrichtung (45) mindestens eine Kammer (38, 39) mit bei der Verstellung sich veränderndem Volumen aufweist, die über ein Absperrventil (42, 43) mit einer Flüssigkeitsquelle (44) verbunden ist.

8. Deformationsregelwalze nach einem der Ansprüche 1 bis 7, dadurch gekennzeichnet, daß sie die eine endständige Walze (201) des Walzensystems bildet, dessen andere endständige Walze (201') ebenfalls durch eine Durchbiegungsregelwalze gebildet ist.

**Claims**

1. Regulated deformation roll for a roll system having at least two rolls forming a roll gap between them, in which regulated deformation roll a roll shell (2), by means of hydrostatic bearing elements which are loaded by pressure transmitters, is supported on a bearer (3), passing through the roll shell (2) and held in such a way as to be fixed in terms of rotation, and is radially adjustable relative to the bearer, in which arrangement primary bearing elements (6) are provided on the roll gap side and secondary bearing elements (7) are provided on the opposite side of the bearer (3), and at least the primary bearing elements (6) can be supplied zonally with different pressure, in particular having bearing elements on which at least two pressure transmitters offset in the peripheral direction act, characterized in that, to reduce the development of heat caused by friction, the hydrostatic bearing surface (31) at least on some of the secondary bearing elements (7) is smaller than that (24) of the primary bearing elements (6), the entire bearing surface of the secondary bearing elements (7) being smaller than the entire bearing surface of the primary bearing elements (6), and in that the secondary bearing elements reduced in surface, in an application intended for the roll, are operated at a higher pressure than would be necessary for producing the same supporting force if the relevant secondary bearing element had the same hydrostatic bearing surface as a non-reduced secondary bearing element.

2. Regulated deformation roll according to claim 1, characterized in that the cross-sectional area of the pressure transmitters (25, 26) in the secondary bearing elements (7) is also smaller than that in the primary bearing elements (6).

3. Regulated deformation roll according to claim 1 or 2, characterized in that the bearing surface and/or pressure-transmitter cross-sectional area of the secondary bearing elements (7) is approximately half as large as those of the primary bearing elements (6).

4. Regulated deformation roll according to one of claims 1 to 3, characterized in that the secondary bearing elements (207) are at a greater axial distance from one another than the primary bearing elements (6).

5. Regulated deformation roll according to one of claims 1 to 4, characterized in that the secondary bearing elements (107) are arranged at a greater distance from the ends of the roll shell than the primary bearing elements (6).

6. Regulated deformation roll according to one of claims 1 to 5, characterized in that the ends of the roll shell (2) are mounted on a bearing ring (9) which is adjustable radially to the bearer (3) but can be locked in any intermediate positions of the adjusting path by a locking device (45).

7. Regulated deformation roll according to claim 6, characterized in that the locking device (45) has at least one chamber (38, 39) having a volume variable during the adjustment, which chamber (38, 39) is connected to a fluid source (44) via a shut-off valve (42, 43).

8. Regulated deformation roll according to one of claims 1 to 7, characterized in that it forms one end roll (201) of the roll system, whose other end roll (201') is likewise formed by a regulated deflection roll.

**Revendications**

1. Cylindre à déformation réglable pour un système à cylindres comportant au moins deux cylindres formant entre-eux une emprise, cylindre dans lequel une enveloppe de cylindre (2) s'appuie, à l'aide d'éléments de palier hydrostatiques chargés par des générateurs de pression, sur un support (3) maintenu fixe en rotation et traversant l'enveloppe de cylindre (2) qui est réglable en direction radiale par rapport au support, des éléments de palier primaires (6) étant prévus sur le côté de l'emprise et des éléments de palier secondaires (7) sur le côté opposé du support (3), tout au moins les éléments de palier primaires pouvant être alimentés en pressions différentes par zones, et les éléments de palier étantnotamment du type dans lesquels agissent au moins deux générateurs de pression décalés en direction périphérique, caractérisé en ce que en vue de réduire la formation de chaleur dûe aux frottements, la surface d'appui hydrostatique (31), au moins pour une partie des éléments de palier secondaires (7), est inférieure à celle (24) des éléments de palier primaires (6), la surface d'appui totale des éléments de palier secondaires (7) étant inférieure à la surface d'appui totale des éléments de palier primaires (6), et en ce que les éléments de palier 25 secondaires, réduits en surface, fonctionnent, dans un cas d'utilisation prévu pour le cylindre, avec une pression plus élevée que celle qui serait nécessaire pour obtenir le même effort de soutien, si l'élément de palier secondaire considéré présentait la même surface d'appui hydrostatique qu'un élément de palier secondaire non réduit en surface.

2. Cylindre à déformation réglable selon la revendication 1, caractérisé en ce que la section des générateurs de pression (25, 26) des éléments de palier secondaires (7) est également inférieure à celle correspondante pour les éléments de palier primaires (6).

3. Cylindre à déformation réglable selon la revendication 1 ou 2, caractérisé en ce que la surface d'appui et/ou la section des générateurs de pression des éléments de palier secondaires (7) sont d'une grandeur égale à environ la moitié de celles correspondantes des éléments de palier primaires (6).

4. Cylindre à déformation réglable selon l'une des revendications 1 à 3, caractérisé en ce que les éléments de palier secondaires (207) présentent un intervalle axial réciproque plus important que les éléments de palier primaires (6).

5. Cylindre à déformation réglable selon l'une des revendications 1 à 4, caractérisé en ce que les éléments de palier secondaires (107) sont situés à une distance plus grande des extrémités de l'enveloppe de cylindre, que les éléments de palier primaires (6).

6. Cylindre à déformation réglable selon l'une des revendications 1 à 5, caractérisé en ce que les extrémités de l'enveloppe de cylindre (2) sont montées sur un anneau de palier (9) qui est mobile radialement par rapport au support (3), mais qui peut être bloqué dans des positions intermédiaires quelconques de la course de déplacement, au moyen d'un dispositif de blocage (45).

7. Cylindre à déformation réglable selon la revendication 6, caractérisé en ce que le dispositif de blocage (45) présente au moins une chambre (38, 39) de volume variable au cours du déplacement de réglage, et reliée à une source de fluide (44) par l'intermédiaire d'une vanne d'arrêt (42, 43).

8. Cylindre à déformation réglable selon l'une des revendications 1 à 7, caractérisé en ce qu'il constitue l'un des cylindres extrêmes (201) du système de cylindres, dont l'autre cylindre extrême (201') est également constitué par un cylindre à flexion réglable.

EP 0 242 660 B1

Fig.1

## Fig. 2

# Fig.3

# Fig.4

EP 0 242 660 B1

Fig. 5

EP 0 242 660 B1

# Fig. 7

# Fig. 6